# EUROPEAN PATENT APPLICATION

(11) **EP 4 401 452 A1**
(43) Date of publication of application: **17.07.2024**
(21) Application number: 21962004.4
(22) Date of filing: 01.11.2021
(51) Int. Cl.: H04W 16/20

(54) **SHORT-DISTANCE WIRELESS COMMUNICATION METHOD, APPARATUS AND SYSTEM**

(71) Applicant: Huawei Technologies Co., Ltd., Shenzhen, Guangdong 518129 (CN)
(72) Inventor: TANG, Yunshuai, Shenzhen, Guangdong 518129 (CN); YUE, Huawei, Shenzhen, Guangdong 518129 (CN); WANG, Tingwu, Shenzhen, Guangdong 518129 (CN)
(74) Representative: Pfenning, Meinig & Partner mbB
(86) International application number: PCT/CN2021/127891
(87) International publication number: WO 2023/070654

(57) **Abstract**

Embodiments of this application provide a short-range wireless communication method, an apparatus, and a system, to resolve a problem in the conventional technology that a system coverage area is limited in the short-range wireless communication method. The method includes: A first device configures a first orthogonal frequency division multiplexing OFDM symbol on a first time domain resource of a first event period, and configures a second OFDM symbol on a second time domain resource of the first event period, where there is a time gap between the first time domain resource and the second time domain resource, the first OFDM symbol is used to transmit data between the first device and a second device, and the second OFDM symbol is used to transmit control signaling between the first device and the second device. The first device sends data to the second device on the first OFDM symbol at a first power, and sends control signaling to the second device on the second OFDM symbol at a second power, where the first power is different from the second power.

## Description

### TECHNICAL FIELD

This application relates to the communication field, and in particular, to a short-range wireless communication method, an apparatus, and a system.

### BACKGROUND

A vehicle-mounted wireless short-range communication system technology is proposed by the China Communication Standards Association, and the technology is used for communication between a vehicle-mounted controller and another communication apparatus, for example, a smartphone or an intelligent wearable device.

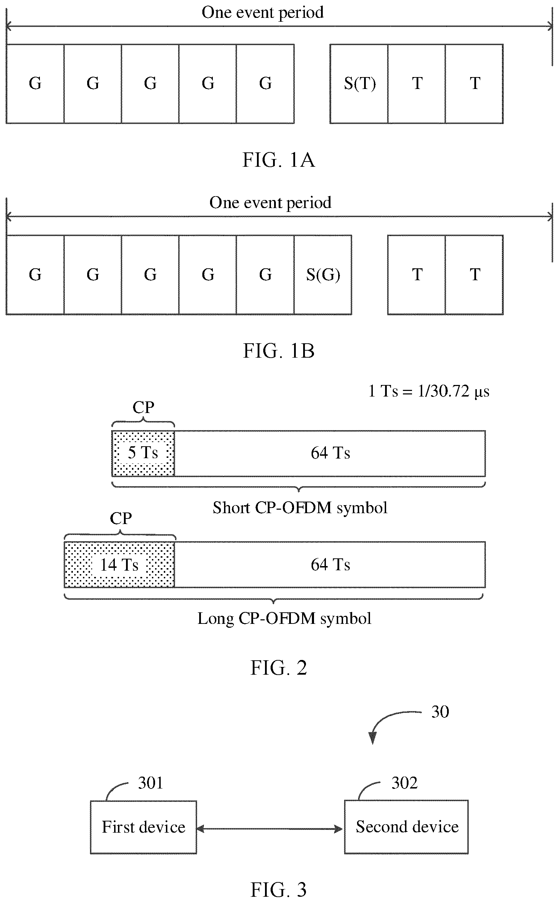

In this technology, data sent by a master control device to a slave device is carried on a G (grant) symbol; data sent by the slave device to the master control device is carried on a T (terminal) symbol; and control signaling is carried on an S(T) symbol or an S(G) symbol, where S(T) represents an uplink S (superframe) symbol, and S(G) represents a downlink S symbol. When the slave device needs to send control signaling to the master control device, the control signaling carried on the S symbol is sent by the slave device to the master control device together with the data carried on the T symbol. In other words, as shown in FIG. 1A, in one event period, when the S symbol is an uplink S symbol, there is no gap between the S symbol and the T symbol. Correspondingly, when the master control device needs to send control signaling to the slave device, the data carried on the G symbol is sent by the master control device to the slave device together with the control signaling carried on the S symbol. In other words, as shown in FIG. 1B, in one event period, when the S symbol is a downlink S symbol, there is no gap between the S symbol and the G symbol.

In the conventional technology, an S symbol can be sent only at a same transmit power together with a T symbol or a G symbol. Usually, lower-order modulation, such as quadrature phase shift keying (quadrature phase shift keying, QPSK), is performed on the S symbol, and higher-order modulation, such as 1024 quadrature amplitude modulation (quadrature amplitude modulation, QAM), is performed on the G symbol or the T symbol. The S symbol on which lower-order modulation is performed may be sent at a high transmit power. However, because a power of the S symbol is limited when the S symbol is sent together with the G symbol or the T symbol, a coverage area of the S symbol is reduced, and a system coverage area is limited. Therefore, the S symbol is not applicable to a scenario in which space is larger than an in-vehicle environment, such as a home, a shopping mall, or a supermarket.

### SUMMARY

Embodiments of this application provide a short-range wireless communication method, an apparatus, and a system, to resolve a problem in the conventional technology that a system coverage area is limited in the short-range wireless communication method.

To achieve the foregoing objectives, the following technical solutions are used in embodiments of this application.

According to a first aspect, a short-range wireless communication method is provided. An apparatus that performs the short-range wireless communication method may be a first device, for example, a terminal device, or may be a module applied to the first device, for example, a Bluetooth chip or a chip system. The following uses an example in which the method is performed by the first device for description. The first device configures a first orthogonal frequency division multiplexing OFDM symbol on a first time domain resource of a first event (event) period, and configures a second OFDM symbol on a second time domain resource of the first event period, where there is a time gap between the first time domain resource and the second time domain resource, the first OFDM symbol is used to transmit data between the first device and a second device, and the second OFDM symbol is used to transmit control signaling between the first device and the second device. The first device sends data to the second device on the first OFDM symbol at a first power, and sends control signaling to the second device on the second OFDM symbol at a second power, where the first power is different from the second power.

In the short-range wireless communication method provided in this embodiment of this application, there is the time gap between the first time domain resource and the second time domain resource, so that the first device can adjust a transmit power by using the time gap, and the first device can send the first OFDM symbol and the second OFDM symbol at different transmit powers. In this case, a transmit power of the second OFDM symbol is no longer limited to a transmit power of the first OFDM symbol. Therefore, a coverage area of the second OFDM symbol can be expanded, to enhance a coverage capability of a system. In addition, when the first device is a master control device and the second device is a slave device, the first device sends the first OFDM symbol and the second OFDM symbol at the different transmit powers, so that problems of an excessively high or low transmit power and an undesirable receive AGC gain can be effectively avoided.

With reference to the first aspect, in a possible implementation, the second power is higher than the first power. In this solution, because a transmit power of the control signaling is higher than a transmit power of the data, performance of a control channel can be improved.

With reference to the first aspect, in a possible implementation, a length of a cyclic prefix in each OFDM symbol in the first OFDM symbol or each OFDM symbol in the second OFDM symbol is greater than a first threshold. In this solution, the length of the cyclic prefix is increased, so that an anti-multipath interference capability and high-order performance of a system can be improved.

With reference to the first aspect, in a possible implementation, the first threshold is 0.456 microseconds.

With reference to the first aspect, in a possible implementation, a length of each symbol in the first OFDM symbol or each symbol in the second OFDM symbol is greater than a second threshold. In this solution, increasing the length of each symbol helps increase capacities of carried data and control signaling, to improve information transmission efficiency.

With reference to the first aspect, in a possible implementation, the second threshold is 2.539 microseconds.

With reference to the first aspect, in a possible implementation, a length of an event period in which the first OFDM symbol and the second OFDM symbol are located is greater than a third threshold. In this solution, increasing the length of the event period helps increase a quantity of symbols that can be accommodated in each event period, to improve data scheduling flexibility.

With reference to the first aspect, in a possible implementation, the third threshold is 20.833 microseconds.

With reference to the first aspect, in a possible implementation, the first device is a slave device, and the second device is a master control device. That the first device configures a first OFDM symbol on a first time domain resource of a first event period, and configures a second OFDM symbol on a second time domain resource of the first event period includes: The first device receives configuration information from the second device. The first device configures the first OFDM symbol on the first time domain resource of the first event period, and configures the second OFDM symbol on the second time domain resource of the first event period based on the configuration information. In this solution, the master control device configures a time domain resource, and the slave device obtains a configuration manner of the time domain resource by receiving the configuration information from the master control device, and performs resource configuration based on the configuration information. For example, the configuration information may be carried in signaling, and is sent by the master control device to the slave device in a broadcast manner.

According to a second aspect, a short-range wireless communication method is provided. An apparatus that performs the short-range wireless communication method may be a second device, for example, a terminal device, or may be a module applied to the second device, for example, a Bluetooth chip or a chip system. The following uses an example in which the method is performed by the second device for description. The second device receives data from a first device on a first OFDM symbol at a first power, and receives control signaling from the first device on a second OFDM symbol at a second power, where there is a time gap between a first time domain resource occupied by the first OFDM symbol and a second time domain resource occupied by the second OFDM symbol, the first OFDM symbol is used to transmit data between the first device and the second device, the second OFDM symbol is used to transmit control signaling between the first device and the second device, and the first power is different from the second power.

With reference to the second aspect, in a possible implementation, the second power is higher than the first power.

With reference to the second aspect, in a possible implementation, a length of a cyclic prefix in each OFDM symbol in the first OFDM symbol or each OFDM symbol in the second OFDM symbol is greater than a first threshold.

With reference to the second aspect, in a possible implementation, the first threshold is 0.456 microseconds.

With reference to the second aspect, in a possible implementation, a length of each symbol in the first OFDM symbol or a length of each symbol in the second OFDM symbol is greater than a second threshold.

With reference to the second aspect, in a possible implementation, the second threshold is 2.539 microseconds.

With reference to the second aspect, in a possible implementation, a length of an event period in which the first OFDM symbol and the second OFDM symbol are located is greater than a third threshold.

With reference to the second aspect, in a possible implementation, the third threshold is 20.833 microseconds.

For technical effects brought by any possible implementation of the second aspect, refer to technical effects brought by different implementations of the first aspect. Details are not described herein again.

According to a third aspect, another short-range wireless communication method is provided. An apparatus that performs the short-range wireless communication method may be a first device, or may be a module applied to the first device, for example, a chip or a chip system. The following uses an example in which the method is performed by the first device for description. The first device configures a first orthogonal frequency division multiplexing OFDM symbol on a first time domain resource of a first event period, and configures a second OFDM symbol on a second time domain resource of the first event period, where there is no time gap between the first time domain resource and the second time domain resource, a length of a cyclic prefix in each symbol in the first OFDM symbol or each symbol in the second OFDM symbol is greater than a first threshold, the first OFDM symbol is used to transmit data between the first device and a second device, and the second OFDM symbol is used to transmit control signaling between the first device and the second device. The first device sends data to the second device on the first OFDM symbol, and sends control signaling to the second device on the second OFDM symbol. In the short-range wireless communication method provided in this embodiment of this application, the length of the CP is increased, so that an anti-multipath interference capability and high-order performance of a system can be improved.

With reference to the third aspect, in a possible implementation, the first threshold is 0.456 microseconds.

With reference to the third aspect, in a possible implementation, that the first device sends data to the second device on the first OFDM symbol, and sends control signaling to the second device on the second OFDM symbol includes: The first device sends the data to the second device on the first OFDM symbol at a first power, and sends the control signaling to the second device on the second OFDM symbol at a second power, where the first power is different from the second power. In this solution, the length of the CP in each symbol is increased, so that the first device can perform power adjustment within a part of the CP, and the first device can send the first OFDM symbol and the second OFDM symbol at different transmit powers. In this case, a transmit power of the second OFDM symbol is no longer limited to a transmit power of the first OFDM symbol. Therefore, a coverage area of the second OFDM symbol can be expanded, to enhance a coverage capability of a system. In addition, when the first device is a master control device and the second device is a slave device, the first device sends the first OFDM symbol and the second OFDM symbol at the different transmit powers, so that problems of an excessively high or low transmit power and an undesirable receive AGC gain can be effectively avoided.

With reference to the third aspect, in a possible implementation, that the first device sends data to the second device on the first OFDM symbol, and sends control signaling to the second device on the second OFDM symbol includes: The first device sends the data to the second device on the first OFDM symbol at a first power, and sends the control signaling to the second device on the second OFDM symbol at the first power. This solution is compatible with a standard of an existing vehicle-mounted wireless short-range communication system technology, and can improve an anti-multipath interference capability and high-order performance of a system on the basis of a small change to the standard.

With reference to the third aspect, in a possible implementation, a length of each symbol in the first OFDM symbol or each symbol in the second OFDM symbol is greater than a second threshold. In this solution, increasing the length of each symbol helps increase capacities of carried data and control signaling, to improve information transmission efficiency.

With reference to the third aspect, in a possible implementation, the second threshold is 2.539 microseconds.

With reference to the third aspect, in a possible implementation, a length of an event period in which the first OFDM symbol and the second OFDM symbol are located is greater than a third threshold. In this solution, increasing the length of the event period helps increase a quantity of symbols that can be accommodated in each event period, to improve data scheduling flexibility.

With reference to the third aspect, in a possible implementation, the third threshold is 20.833 microseconds.

With reference to the third aspect, in a possible implementation, the first device is a slave device, and the second device is a master control device. That the first device configures a first OFDM symbol on a first time domain resource of a first event period, and configures a second OFDM symbol on a second time domain resource of the first event period includes: The first device receives configuration information from the second device. The first device configures the first OFDM symbol on the first time domain resource of the first event period, and configures the second OFDM symbol on the second time domain resource of the first event period based on the configuration information. In this solution, the master control device configures a time domain resource, and the slave device obtains a configuration manner of the time domain resource by receiving the configuration information from the master control device, and performs resource configuration based on the configuration information. For example, the configuration information may be carried in signaling, and is sent by the master control device to the slave device in a broadcast manner.

According to a fourth aspect, a short-range wireless communication method is provided. An apparatus that performs the short-range wireless communication method may be a second device, or may be a module applied to the second device, for example, a chip or a chip system. The following uses an example in which the method is performed by the second device for description. The second device receives data from a first device on a first OFDM symbol, and receives control signaling from the first device on a second OFDM symbol, where there is no time gap between a first time domain resource occupied by the first OFDM symbol and a second time domain resource occupied by the second OFDM symbol, a length of a cyclic prefix in each symbol in the first OFDM symbol or each symbol in the second OFDM symbol is greater than a first threshold, the first OFDM symbol is used to transmit data between the first device and the second device, and the second OFDM symbol is used to transmit control signaling between the first device and the second device.

With reference to the fourth aspect, in a possible implementation, the first threshold is 0.456 microseconds.

With reference to the fourth aspect, in a possible implementation, that the second device receives data from a first device on a first OFDM symbol, and receives control signaling from the first device on a second OFDM symbol includes: The second device receives the data from the first device on the first OFDM symbol at a first power, and receives the control signaling from the first device on the second OFDM symbol at a second power, where the first power is different from the second power.

With reference to the fourth aspect, in a possible implementation, that the second device receives data from a first device on a first OFDM symbol, and receives control signaling from the first device on a second OFDM symbol includes: The second device receives the data from the first device on the first OFDM symbol at a first power, and receives the control signaling from the first device on the second OFDM symbol at the first power.

With reference to the fourth aspect, in a possible implementation, a length of each symbol in the first OFDM symbol or each symbol in the second OFDM symbol is greater than a second threshold.

With reference to the fourth aspect, in a possible implementation, the second threshold is 2.539 microseconds.

With reference to the fourth aspect, in a possible implementation, a length of an event period in which the first OFDM symbol and the second OFDM symbol are located is greater than a third threshold.

With reference to the fourth aspect, in a possible implementation, the third threshold is 20.833 microseconds.

For technical effects brought by any possible implementation of the fourth aspect, refer to technical effects brought by different implementations of the third aspect. Details are not described herein again.

According to a fifth aspect, a communication apparatus is provided to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing function.

With reference to the fifth aspect, in a possible implementation, the communication apparatus is a Bluetooth chip or a first device, and the communication apparatus includes a transceiver and a processor. The processor is configured to: configure a first orthogonal frequency division multiplexing OFDM symbol on a first time domain resource of a first event period, and configure a second OFDM symbol on a second time domain resource of the first event period, where there is a time gap between the first time domain resource and the second time domain resource, the first OFDM symbol is used to transmit data between the communication apparatus and a second device, and the second OFDM symbol is used to transmit control signaling between the communication apparatus and the second device. The transceiver is configured to: send data to the second device on the first OFDM symbol at a first power, and send control signaling to the second device on the second OFDM symbol at a second power, where the first power is different from the second power.

With reference to the fifth aspect, in a possible implementation, the second power is higher than the first power.

With reference to the fifth aspect, in a possible implementation, a length of a cyclic prefix in each OFDM symbol in the first OFDM symbol or each OFDM symbol in the second OFDM symbol is greater than a first threshold.

With reference to the fifth aspect, in a possible implementation, the first threshold is 0.456 microseconds.

With reference to the fifth aspect, in a possible implementation, a length of each symbol in the first OFDM symbol or each symbol in the second OFDM symbol is greater than a second threshold.

With reference to the fifth aspect, in a possible implementation, the second threshold is 2.539 microseconds.

With reference to the fifth aspect, in a possible implementation, a length of an event period in which the first OFDM symbol and the second OFDM symbol are located is greater than a third threshold.

With reference to the fifth aspect, in a possible implementation, the third threshold is 20.833 microseconds.

With reference to the fifth aspect, in a possible implementation, the communication apparatus is a slave device, and the second device is a master control device. That the processor is configured to: configure a first orthogonal frequency division multiplexing OFDM symbol on a first time domain resource of a first event period, and configure a second OFDM symbol on a second time domain resource of the first event period includes: receiving configuration information from the second device by using the transceiver; and configuring the first OFDM symbol on the first time domain resource of the first event period, and configuring the second OFDM symbol on the second time domain resource of the first event period based on the configuration information.

For technical effects brought by any possible implementation of the fifth aspect, refer to technical effects brought by different implementations of the first aspect. Details are not described herein again.

According to a sixth aspect, a communication apparatus is provided to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing function.

With reference to the sixth aspect, in a possible implementation, the communication apparatus is a Bluetooth chip or a second device, and the communication apparatus includes a transceiver. The transceiver is configured to: receive data from a first device on a first OFDM symbol at a first power, and receive control signaling from the first device on a second OFDM symbol at a second power, where there is a time gap between a first time domain resource occupied by the first OFDM symbol and a second time domain resource occupied by the second OFDM symbol, the first OFDM symbol is used to transmit data between the first device and the communication apparatus, the second OFDM symbol is used to transmit control signaling between the first device and the communication apparatus, and the first power is different from the second power.

With reference to the sixth aspect, in a possible implementation, the second power is higher than the first power.

With reference to the sixth aspect, in a possible implementation, a length of a cyclic prefix in each OFDM symbol in the first OFDM symbol or each OFDM symbol in the second OFDM symbol is greater than a first threshold.

With reference to the sixth aspect, in a possible implementation, the first threshold is 0.456 microseconds.

With reference to the sixth aspect, in a possible implementation, a length of each symbol in the first OFDM symbol or each symbol in the second OFDM symbol is greater than a second threshold.

With reference to the sixth aspect, in a possible implementation, the second threshold is 2.539 microseconds.

With reference to the sixth aspect, in a possible implementation, a length of an event period in which the first OFDM symbol and the second OFDM symbol are located is greater than a third threshold.

With reference to the sixth aspect, in a possible implementation, the third threshold is 20.833 microseconds.

For technical effects brought by any possible implementation of the sixth aspect, refer to technical effects brought by different implementations of the first aspect. Details are not described herein again.

According to a seventh aspect, a communication apparatus is provided to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing function.

With reference to the seventh aspect, in a possible implementation, the communication apparatus is a Bluetooth chip or a first device, and the communication apparatus includes a transceiver and a processor. The processor is configured to: configure a first orthogonal frequency division multiplexing OFDM symbol on a first time domain resource of a first event period, and configure a second OFDM symbol on a second time domain resource of the first event period, where there is no time gap between the first time domain resource and the second time domain resource, a length of a cyclic prefix in each symbol in the first OFDM symbol or each symbol in the second OFDM symbol is greater than a first threshold, the first OFDM symbol is used to transmit data between the communication apparatus and a second device, and the second OFDM symbol is used to transmit control signaling between the communication apparatus and the second device. The transceiver is configured to: send data to the second device on the first OFDM symbol, and send control signaling to the second device on the second OFDM symbol.

With reference to the seventh aspect, in a possible implementation, the first threshold is 0.456 microseconds.

With reference to the seventh aspect, in a possible implementation, that the transceiver is configured to: send data to the second device on the first OFDM symbol, and send control signaling to the second device on the second OFDM symbol includes: sending the data to the second device on the first OFDM symbol at a first power, and sending the control signaling to the second device on the second OFDM symbol at a second power, where the first power is different from the second power.

With reference to the seventh aspect, in a possible implementation, that the transceiver is configured to: send data to the second device on the first OFDM symbol, and send control signaling to the second device on the second OFDM symbol includes: sending the data to the second device on the first OFDM symbol at a first power, and sending the control signaling to the second device on the second OFDM symbol at the first power.

With reference to the seventh aspect, in a possible implementation, a length of each symbol in the first OFDM symbol or each symbol in the second OFDM symbol is greater than a second threshold.

With reference to the seventh aspect, in a possible implementation, the second threshold is 2.539 microseconds.

With reference to the seventh aspect, in a possible implementation, a length of an event period in which the first OFDM symbol and the second OFDM symbol are located is greater than a third threshold.

With reference to the seventh aspect, in a possible implementation, the third threshold is 20.833 microseconds.

With reference to the seventh aspect, in a possible implementation, the communication apparatus is a slave device, and the second device is a master control device. That the processor is configured to: configure a first orthogonal frequency division multiplexing OFDM symbol on a first time domain resource of a first event period, and configure a second OFDM symbol on a second time domain resource of the first event period includes: receiving configuration information from the second device by using the transceiver; and configuring the first OFDM symbol on the first time domain resource of the first event period, and configuring the second OFDM symbol on the second time domain resource of the first event period based on the configuration information.

For technical effects brought by any possible implementation of the seventh aspect, refer to technical effects brought by different implementations of the third aspect. Details are not described herein again.

According to an eighth aspect, a communication apparatus is provided to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing function.

With reference to the eighth aspect, in a possible implementation, the communication apparatus is a Bluetooth chip or a second device, and the communication apparatus includes a transceiver. The transceiver is configured to: receive data from a first device on a first OFDM symbol, and receive control signaling from the first device on a second OFDM symbol, where there is no time gap between a first time domain resource occupied by the first OFDM symbol and a second time domain resource occupied by the second OFDM symbol, a length of a cyclic prefix in each symbol in the first OFDM symbol or each symbol in the second OFDM symbol is greater than a first threshold, the first OFDM symbol is used to transmit data between the first device and the communication apparatus, and the second OFDM symbol is used to transmit control signaling between the first device and the communication apparatus.

With reference to the eighth aspect, in a possible implementation, the first threshold is 0.456 microseconds.

With reference to the eighth aspect, in a possible implementation, that the transceiver is configured to: receive data from a first device on a first OFDM symbol, and receive control signaling from the first device on a second OFDM symbol includes: receiving the data from the first device on the first OFDM symbol at a first power, and receiving the control signaling from the first device on the second OFDM symbol at a second power, where the first power is different from the second power.

With reference to the eighth aspect, in a possible implementation, that the transceiver is configured to: receive data from a first device on a first OFDM symbol, and receive control signaling from the first device on a second OFDM symbol includes: receiving the data from the first device on the first OFDM symbol at a first power, and receiving the control signaling from the first device on the second OFDM symbol at the first power.

With reference to the eighth aspect, in a possible implementation, a length of each symbol in the first OFDM symbol or each symbol in the second OFDM symbol is greater than a second threshold.

With reference to the eighth aspect, in a possible implementation, the second threshold is 2.539 microseconds.

With reference to the eighth aspect, in a possible implementation, a length of an event period in which the first OFDM symbol and the second OFDM symbol are located is greater than a third threshold.

With reference to the eighth aspect, in a possible implementation, the third threshold is 20.833 microseconds.

For technical effects brought by any possible implementation of the eighth aspect, refer to technical effects brought by different implementations of the third aspect. Details are not described herein again.

According to a ninth aspect, a communication system is provided, and includes the communication apparatus according to the fifth aspect and the communication apparatus according to the sixth aspect, or includes the communication apparatus according to the seventh aspect and the communication apparatus according to the eighth aspect.

According to a tenth aspect, a communication apparatus is provided, and includes a processor. The processor is configured to: after being coupled to a memory and reading computer instructions stored in the memory, perform, according to the instructions, the method according to any one of the first aspect, the second aspect, the third aspect, or the fourth aspect.

With reference to the tenth aspect, in a possible implementation, the communication apparatus further includes the memory, and the memory is configured to store the computer instructions.

With reference to the tenth aspect, in a possible implementation, the communication apparatus further includes a communication interface, and the communication interface is used for communication between the communication apparatus and another device. For example, the communication interface may be a transceiver, an input/output interface, an interface circuit, an output circuit, an input circuit, a pin, or a related circuit.

With reference to the tenth aspect, in a possible implementation, the communication apparatus may be a chip or a chip system. When the communication apparatus is the chip system, the communication apparatus may include a chip, or may include a chip and another discrete component.

According to an eleventh aspect, a computer-readable storage medium is provided. The computer-readable storage medium stores instructions. When the instructions are run on a computer, the computer is enabled to perform the method according to any one of the first aspect, the second aspect, the third aspect, or the fourth aspect.

According to a twelfth aspect, a computer program product including instructions is provided. When the computer program product runs on a computer, the computer is enabled to perform the method according to any one of the first aspect, the second aspect, the third aspect, or the fourth aspect.

For technical effects brought by any possible implementation of the ninth aspect to the twelfth aspect, refer to technical effects brought by different implementations of the first aspect or the third aspect. Details are not described herein again.

### BRIEF DESCRIPTION OF DRAWINGS

FIG. 1A is a schematic diagram 1 of a format of an event period according to the conventional technology;
FIG. 1B is a schematic diagram 2 of a format of an event period according to the conventional technology;
FIG. 2 is a schematic diagram of structures of a long CP-OFDM symbol and a short CP-OFDM symbol according to the conventional technology;
FIG. 3 is a schematic diagram of an architecture of a communication system according to an embodiment of this application;
FIG. 4 is a schematic diagram 1 of a structure of a communication apparatus according to an embodiment of this application;
FIG. 5 is a flowchart of a short-range wireless communication method according to an embodiment of this application;
FIG. 6 is a schematic diagram 1 of a format of an event period according to this application and a format of an event period according to the conventional technology;
FIG. 7 is a schematic diagram 2 of a format of an event period according to this application and a format of an event period according to the conventional technology;
FIG. 8 is a schematic diagram 3 of a format of an event period according to this application and a format of an event period according to the conventional technology;
FIG. 9 is a flowchart of another short-range wireless communication method according to an embodiment of this application;
FIG. 10 is a schematic diagram 4 of a format of an event period according to this application and a format of an event period according to the conventional technology;
FIG. 11 is a schematic diagram 5 of an event period format according to this application and a format of an event period according to the conventional technology; and
FIG. 12 is a schematic diagram 2 of a structure of a communication apparatus according to an embodiment of this application.

### DESCRIPTION OF EMBODIMENTS

For ease of understanding technical solutions in embodiments of this application, the following first briefly describes technologies or terms related to this application.

### 1. Cyclic prefix (cyclic prefix, CP)

In a vehicle-mounted wireless short-range communication system technology, a G symbol, a T symbol, or an S symbol is usually an orthogonal frequency division multiplexing (orthogonal frequency division multiplexing, OFDM) symbol, and a CP is introduced into each OFDM symbol to eliminate intersymbol interference (intersymbol interference, ISI) and intercarrier interference (intercarrier interference, ICI).

Currently, a length of the CP may be 0.163 µs or 0.456 µs. An OFDM symbol with a CP whose length is 0.163 µs may be referred to as a short CP-OFDM symbol, and an OFDM symbol with a CP whose length is 0.456 µs may be referred to as a long CP-OFDM symbol. FIG. 2 shows structures of a long CP-OFDM symbol and a short CP-OFDM symbol. A length of a part other than a CP in the short CP OFDM symbol or the long CP-OFDM symbol is 64 Ts. A length of the CP in the short CP-OFDM symbol is 5 Ts, a length of the short CP-OFDM symbol is 5 Ts + 64 Ts = 69 Ts, a length of the CP in the long CP-OFDM symbol is 14 Ts, and a length of the long CP-OFDM symbol is 14 Ts + 64 Ts = 78 Ts. According to the equation 1 Ts = 1/30.72 µs, it may be obtained through calculation that 64 Ts = 64/30.72 µs ≈ 2.083 µs, 5 Ts = 5/30.72 µs ≈ 0.163 µs, 69 Ts = 69/30.72 µs ≈ 2.246 µs, 14 Ts = 14/30.72 µs ≈ 0.456 µs, and 78 Ts = 78/30.72 µs ≈ 2.539 µs.

### 2. Event period

In time domain, configurations of a G symbol, a T symbol, and an S symbol are periodically repeated. An event period is a period. In a vehicle-mounted wireless short-range communication system technology, a length of an event period is usually 20.833 µs.

### 3. Short-range wireless communication standard

Currently, the leading short-range wireless communication standard is a standard of a vehicle-mounted wireless short-range communication system technology mentioned in the background. However, the standard of the vehicle-mounted wireless short-range communication system technology is mainly designed for an in-vehicle use environment. If the standard is promoted to use in scenarios such as a home, a shopping mall, and a supermarket, the following problems exist:

### Problem 1: Limited system coverage area

As described in the background, there is no gap between the S symbol and the T symbol or the G symbol. Therefore, when the S symbol and the T symbol, or the S symbol and the G symbol are sent, if a transmit power of the S symbol needs to be different from a transmit power of the T symbol or the G symbol, to ensure transmission quality of control signaling or data, adjustment of the transmit power cannot occupy a part other than a CP in each symbol, and can be performed only within the CP. However, because a length of a CP in each symbol is very short, after power adjustment is performed within a part of the CP, the CP is shorter, and therefore capabilities of eliminating ISI and ICI are weakened, even the length of the CP is insufficient to support power adjustment, and transmission quality of control signaling or data is affected. That is, the S symbol can be sent only at a same transmit power together with the T symbol or the G symbol. At a receive end, the S symbol and the T symbol or the G symbol are received at a same automatic gain control (automatic gain control, AGC) gain that matches the transmit power.

To improve data transmission efficiency, a modulation order used by the G symbol or the T symbol carrying data is usually higher than a modulation order used by the S symbol carrying control signaling. The S symbol on which lower-order modulation is performed may be sent at a high transmit power. However, because a power of the S symbol is limited when the S symbol and the G symbol or the T symbol are sent at a same power, a coverage area of the S symbol is reduced, and a system coverage area is limited.

### Problem 2: Excessively high or low transmit power and undesirable receive AGC gain

In downlink transmission, because a master control device may simultaneously send an S symbol and a G symbol to different slave devices, the S symbol and the G symbol require different transmit powers, and also require different receive AGC gains.

For example, for a slave device that is close to the master control device, the G symbol does not require an excessively high transmit power. However, to consider a slave device that is away from the master control device, a system requires a large coverage area, that is, the S symbol requires a high transmit power. Because the S symbol and the G symbol can be sent only at a same transmit power, if the S symbol and the G symbol are sent at a low power, a transmit power of the S symbol is excessively low; or if the S symbol and the G symbol are sent at a high power, a transmit power of the G symbol is excessively high. In addition, because the S symbol and the G symbol can be received only at a same AGC gain, if the S symbol and the G symbol are received at an AGC gain that matches a low power, a receive AGC gain of the S symbol is not ideal; or if the S symbol and the G symbol are received at an AGC gain that matches a high power, a receive AGC gain of the G symbol is not ideal.

### Problem 3: Weak anti-multipath interference capability

Because a length of a CP in each symbol is very short, intersymbol interference cannot be effectively eliminated, and an anti-multipath interference capability and high-order performance of a system are reduced.

The following describes the technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more unless otherwise specified. At least one of the following items (pieces) or a similar expression thereof refers to any combination of these items, including any combination of singular items (pieces) or plural items (pieces). For example, at least one item (piece) of a, b, or c may indicate a, b, c, a and b, a and c, b and c, or a, b, and c. Herein, a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

FIG. 3 shows a communication system 30 according to an embodiment of this application. The communication system 30 includes a first device 301 and a second device 302.

In a possible implementation, the first device 301 is configured to: configure a first OFDM symbol on a first time domain resource of a first event period, and configure a second OFDM symbol on a second time domain resource of the first event period, where there is a time gap between the first time domain resource and the second time domain resource, the first OFDM symbol is used to transmit data between the first device 301 and the second device 302, and the second OFDM symbol is used to transmit control signaling between the first device 301 and the second device 302. The first device 301 is further configured to: send data to the second device 302 on the first OFDM symbol at a first power, and send control signaling to the second device 302 on the second OFDM symbol at a second power, where the first power is different from the second power. The second device 302 is configured to receive the data from the first device 301 on the first OFDM symbol at the first power, and receive the control signaling from the first device 301 on the second OFDM symbol at the second power. Specific implementations and technical effects of the solution are described in detail in the following method embodiments. Details are not described herein again.

In another possible implementation, the first device 301 is configured to: configure a first OFDM symbol on a first time domain resource of a first event period, and configure a second OFDM symbol on a second time domain resource of the first event period, where there is no time gap between the first time domain resource and the second time domain resource. A length of a cyclic prefix in each symbol in the first OFDM symbol or each symbol in the second OFDM symbol is greater than a first threshold. The first OFDM symbol is used to transmit data between the first device 301 and the second device 302, and the second OFDM symbol is used to transmit control signaling between the first device 301 and the second device 302. The first device 301 is further configured to: send data to the second device 302 on the first OFDM symbol, and send control signaling to the second device 302 on the second OFDM symbol. The second device 302 is configured to: receive the data from the first device 301 on the first OFDM symbol, and receive the control signaling from the first device 301 on the second OFDM symbol. Specific implementations and technical effects of the solution are described in detail in the following method embodiments. Details are not described herein again.

Optionally, a related function of the first device or the second device in this embodiment of this application may be implemented by one device, or may be jointly implemented by a plurality of devices, or may be implemented by one or more functional modules in one device. This is not specifically limited in this embodiment of this application. It may be understood that the foregoing function may be a network element in a hardware device, may be a software function running on dedicated hardware, a combination of hardware and software, or a virtualization function instantiated on a platform (for example, a cloud platform).

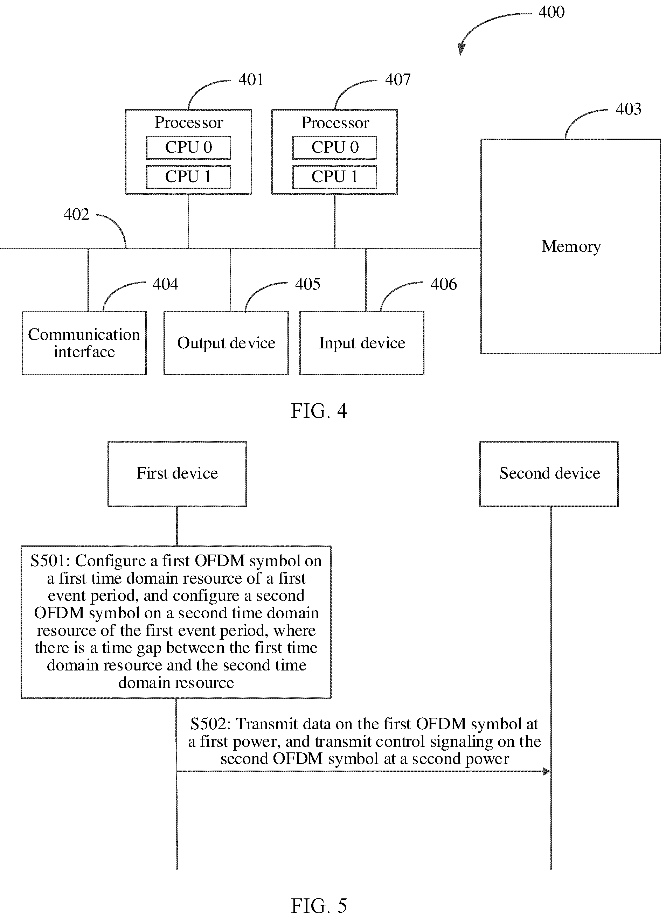

For example, the related function of the first device or the second device in this embodiment of this application may be implemented by using a communication apparatus 400 in FIG. 4.

FIG. 4 is a schematic diagram of a structure of the communication apparatus 400 according to an embodiment of this application. The communication apparatus 400 includes one or more processors 401, a communication line 402, and at least one communication interface (in FIG. 4, only an example in which a communication interface 404 and one processor 401 are included is used for description), and optionally, may further include a memory 403.

The processor 401 may be a CPU, a microprocessor, an application-specific integrated circuit (application-specific integrated circuit, ASIC), or one or more integrated circuits for controlling program execution of the solutions of this application.

The communication line 402 may include a path for connecting different components.

The communication interface 404 may be a transceiver module configured to communicate with another device or a communication network, for example, the Ethernet, a RAN, or a WLAN. For example, the transceiver module may be an apparatus such as a transceiver or a transceiver machine. Optionally, the communication interface 404 may alternatively be a transceiver circuit located in the processor 401, and is configured to implement signal input and signal output of the processor.

The memory 403 may be an apparatus having a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory may exist independently, and is connected to the processor through the communication line 402. The memory may alternatively be integrated with the processor.

The memory 403 is configured to store computer-executable instructions for performing the solutions of this application, and the processor 401 controls execution. The processor 401 is configured to execute the computer-executable instructions stored in the memory 403, to implement the short-range wireless communication method provided in embodiments of this application.

Alternatively, in this embodiment of this application, the processor 401 may perform a processing-related function in the short-range wireless communication method provided in the following embodiment of this application, and the communication interface 404 is responsible for communicating with another device or a communication network. This is not specifically limited in this embodiment of this application.

The computer-executable instructions in embodiments of this application may also be referred to as application program code. This is not specifically limited in embodiments of this application.

In a specific implementation, in an embodiment, the processor 401 may include one or more CPUs such as a CPU 0 and a CPU 1 in FIG. 4.

In a specific implementation, in an embodiment, the communication apparatus 400 may include a plurality of processors such as the processor 401 and a processor 407 in FIG. 4. Each of the processors may be a single-core (single-CPU) processor or a multi-core (multi-CPU) processor. The processor herein may be one or more devices, circuits, and/or processing cores configured to process data (for example, computer program instructions).

In a specific implementation, in an embodiment, the communication apparatus 400 may further include an output device 405 and an input device 406. The output device 405 communicates with the processor 401, and may display information in a plurality of manners.

The communication apparatus 400 may be a general-purpose apparatus or a dedicated apparatus. For example, the communication apparatus 400 may be a Bluetooth headset, a desktop computer, a portable computer, a network server, a personal digital assistant (personal digital assistant, PDA), a mobile phone, a tablet computer, a wireless terminal apparatus, a vehicle-mounted terminal apparatus, an embedded device, or a device having a structure similar to that in FIG. 4. A type of the communication apparatus 400 is not limited in this embodiment of this application.

The following describes in detail the short-range wireless communication method provided in embodiments of this application with reference to FIG. 1 to FIG. 4.

FIG. 5 shows a short-range wireless communication method according to an embodiment of this application. The short-range wireless communication method includes the following steps.

S501: A first device configures a first OFDM symbol on a first time domain resource of a first event period, and configures a second OFDM symbol on a second time domain resource of the first event period, where there is a time gap between the first time domain resource and the second time domain resource, the first OFDM symbol is used to transmit data between the first device and a second device, and the second OFDM symbol is used to transmit control signaling between the first device and the second device.

For example, the first device may be a master control device, and the second device may be one of one or more slave devices; or the first device may be one of one or more slave devices, and the second device may be a master control device. This is not limited in this embodiment of this application.

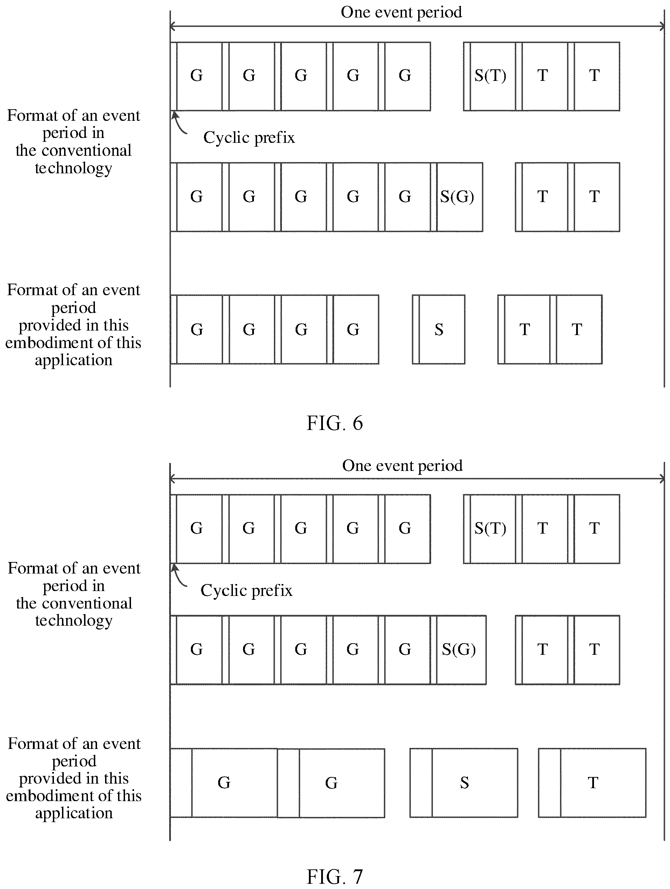

As shown in FIG. 6, an example in which the first device is a master control device and the second device is one of one or more slave devices is first used for description, that is, downlink transmission from the master control device to the slave device is used as example for description. The first OFDM symbol is a G symbol, the first time domain resource is a time domain resource occupied by the G symbol, the second OFDM symbol is an S(G) symbol, and the second time domain resource is a time domain resource occupied by the S(G) symbol. As described in the background, in the conventional technology, there is no gap between the S(G) symbol and a plurality of G symbols. In this embodiment of this application, there is a time gap between the S(G) symbol and the plurality of G symbols. It should be noted that an S symbol in FIG. 6 may represent the S(G) symbol.

As shown in FIG. 6, an example in which the first device is one of one or more slave devices and the second device is a master control device is then used for description, that is, uplink transmission from the slave device to the master control device is used for description. The first OFDM symbol is a T symbol, the first time domain resource is a time domain resource occupied by the T symbol, the second OFDM symbol is an S(T) symbol, and the second time domain resource is a time domain resource occupied by the S(T) symbol. As described in the background, in the conventional technology, there is no gap between the S(T) symbol and a plurality of T symbols. In this embodiment of this application, there is a time gap between the S(T) symbol and the plurality of T symbols. It should be noted that the S symbol in FIG. 6 may further represent the S(T) symbol.

Optionally, a length of a cyclic prefix in each OFDM symbol in the first OFDM symbol or each OFDM symbol in the second OFDM symbol is greater than a first threshold. In this solution, the length of the cyclic prefix is increased, so that an anti-multipath interference capability and high-order performance of a system can be improved.

In an existing communication standard, different standards have different stipulations on a length of a CP in an OFDM symbol. A standard of a vehicle-mounted wireless short-range communication system technology is used as an example. The length of the CP is usually 0.163 µs or 0.456 µs. For example, the first threshold may be 0.456 µs.

Optionally, a length of each symbol in the first OFDM symbol or each symbol in the second OFDM symbol is greater than a second threshold. In this solution, increasing the length of each symbol helps increase capacities of carried data and control signaling, to improve information transmission efficiency.

In an existing communication standard, different standards have different stipulations on a length of an OFDM symbol. A standard of a vehicle-mounted wireless short-range communication system technology is used as an example. The length of the OFDM symbol is usually 2.246 µs or 2.539 µs. For example, the second threshold may be 2.539 µs.

For example, with reference to FIG. 6, FIG. 7 shows a format of another event period according to an embodiment of this application. In this embodiment of this application, there is a time gap between an S symbol and a G symbol or a T symbol, a length of a CP in each symbol is greater than 0.456 µs specified in the standard of the vehicle-mounted wireless short-range communication system technology, and a length of each symbol is greater than 2.539 µs specified in the standard of the vehicle-mounted wireless short-range communication system technology.

Optionally, a length of an event period in which the first OFDM symbol and the second OFDM symbol are located is greater than a third threshold. In this solution, increasing the length of the event period helps increase a quantity of symbols that can be accommodated in each event period, to improve data scheduling flexibility.

In an existing communication standard, different standards have different stipulations on a length of an event period. A standard of a vehicle-mounted wireless short-range communication system technology is used as an example. A length of an event period is usually 20.833 µs. For example, the third threshold may be 20.833 µs.

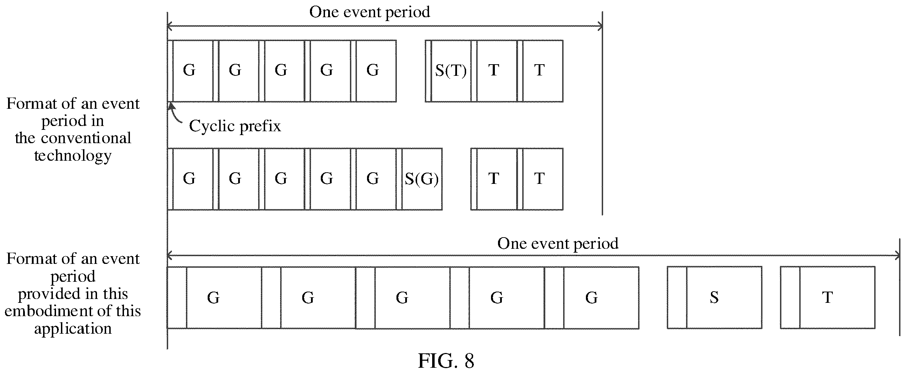

For example, with reference to FIG. 7, FIG. 8 shows a format of another event period according to an embodiment of this application. In this embodiment of this application, there is a time gap between an S symbol and a G symbol or a T symbol, a length of a CP in each symbol is greater than 0.456 µs specified in the standard of the vehicle-mounted wireless short-range communication system technology, a length of each symbol is greater than 2.539 µs specified in the standard of the vehicle-mounted wireless short-range communication system technology, and a length of an event period in which the S symbol, the G symbol, and the T symbol are located is greater than 20.833 µs specified in the standard of the vehicle-mounted wireless short-range communication system technology.

Optionally, the first device is a slave device, and the second device is a master control device. That a first device configures a first OFDM symbol on a first time domain resource of a first event period, and configures a second OFDM symbol on a second time domain resource of the first event period includes: The first device receives configuration information from the second device. The first device configures the first OFDM symbol on the first time domain resource of the first event period, and configures the second OFDM symbol on the second time domain resource of the first event period based on the configuration information.

In this embodiment of this application, the master control device configures a time domain resource, and the slave device obtains a configuration manner of the time domain resource by receiving the configuration information from the master control device, and performs resource configuration based on the configuration information. For example, the configuration information may be carried in signaling, and is sent by the master control device to the slave device in a broadcast manner.

S502: The first device sends data to the second device on the first OFDM symbol at a first power, and sends control signaling to the second device on the second OFDM symbol at a second power; and correspondingly, the second device receives the data from the first device on the first OFDM symbol at the first power, and receives the control signaling from the first device on the second OFDM symbol at the second power, where the first power is different from the second power.

For example, that the second device receives the data at the first power may be specifically implemented by receiving the data at an AGC gain that matches the first power. Similarly, that the second device receives the control signaling at the second power may be specifically implemented by receiving the control signaling at an AGC gain that matches the second power.

Optionally, the second power is higher than the first power. In this solution, because a transmit power of the control signaling is higher than a transmit power of the data, performance of a control channel can be improved.

In the short-range wireless communication method provided in this embodiment of this application, there is the time gap between the first time domain resource and the second time domain resource, so that the first device can adjust a transmit power by using the time gap, and the first device can send the first OFDM symbol and the second OFDM symbol at different transmit powers. In this case, a transmit power of the second OFDM symbol is no longer limited to a transmit power of the first OFDM symbol. Therefore, a coverage area of the second OFDM symbol can be expanded, to enhance a coverage capability of a system. In addition, when the first device is a master control device and the second device is a slave device, the first device sends the first OFDM symbol and the second OFDM symbol at the different transmit powers, so that problems of an excessively high or low transmit power and an undesirable receive AGC gain can be effectively avoided.

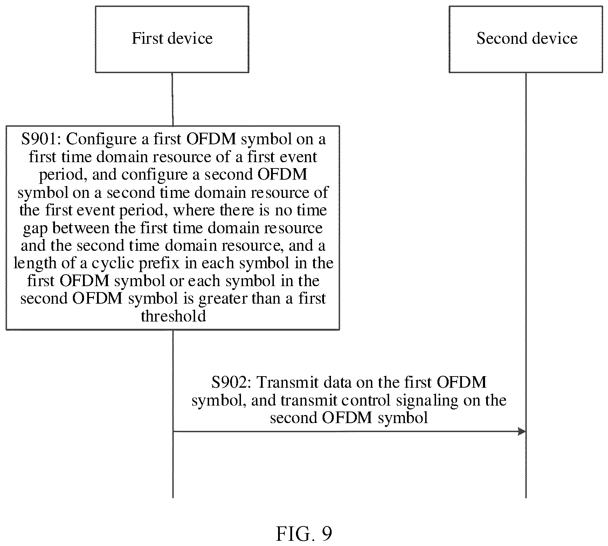

FIG. 9 shows another short-range wireless communication method according to an embodiment of this application. The short-range wireless communication method includes the following steps.

S901: A first device configures a first OFDM symbol on a first time domain resource of a first event period, and configures a second OFDM symbol on a second time domain resource of the first event period, where there is no time gap between the first time domain resource and the second time domain resource, a length of a cyclic prefix in each symbol in the first OFDM symbol or each symbol in the second OFDM symbol is greater than a first threshold, the first OFDM symbol is used to transmit data between the first device and a second device, and the second OFDM symbol is used to transmit control signaling between the first device and the second device.

In the short-range wireless communication method provided in this embodiment of this application, the length of the CP is increased, so that an anti-multipath interference capability and high-order performance of a system can be improved.

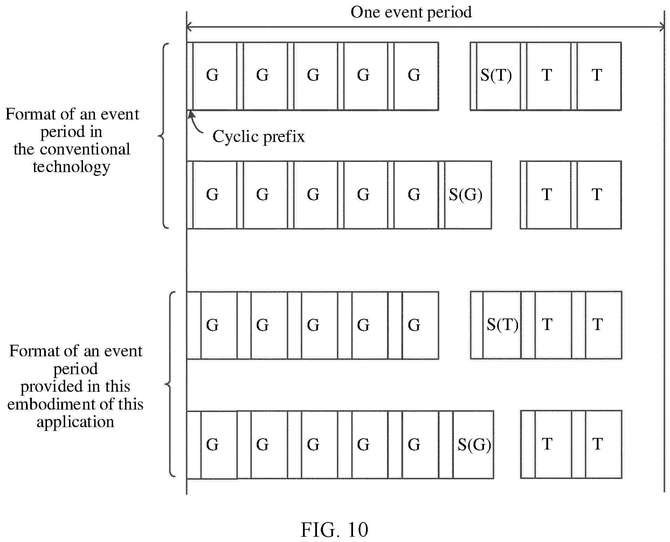

As shown in FIG. 10, an example in which the first device is a master control device, the second device is one of one or more slave devices, and the first threshold is 0.456 µs specified in a standard of a vehicle-mounted wireless short-range communication system technology is first used for description. In downlink transmission, the first OFDM symbol is a G symbol, the first time domain resource is a time domain resource occupied by the G symbol, the second OFDM symbol is an S(G) symbol, and the second time domain resource is a time domain resource occupied by the S(G) symbol. In this embodiment of this application, there is no time gap between the S(G) symbol and a plurality of G symbols, and a length of a CP in each symbol in this embodiment of this application is greater than 0.456 µs.

As shown in FIG. 10, an example in which the first device is one of one or more slave devices, the second device is a master control device, and the first threshold is 0.456 µs specified in a standard of a vehicle-mounted wireless short-range communication system technology is then used for description. In uplink transmission, the first OFDM symbol is a T symbol, the first time domain resource is a time domain resource occupied by the T symbol, the second OFDM symbol is an S(T) symbol, and the second time domain resource is a time domain resource occupied by the S(T) symbol. In this embodiment of this application, there is no time gap between the S(T) symbol and a plurality of T symbols, and a length of a CP in each symbol in this embodiment of this application is greater than 0.456 µs.

Optionally, a length of each symbol in the first OFDM symbol or each symbol in the second OFDM symbol is greater than a second threshold. In this solution, increasing the length of each symbol helps increase capacities of carried data and control signaling, to improve information transmission efficiency.

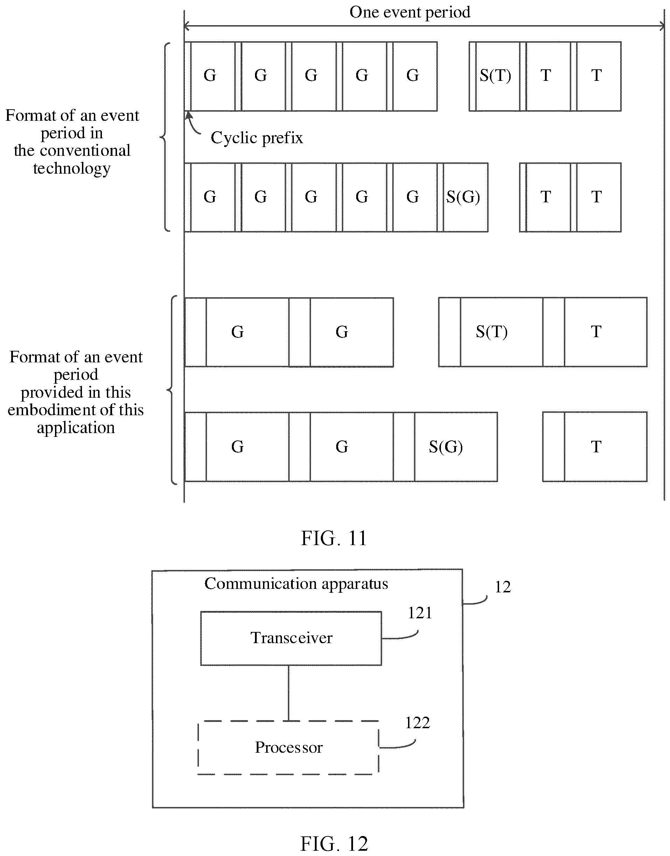

For example, with reference to FIG. 10, FIG. 11 shows a format of another event period according to an embodiment of this application. An example in which the second threshold is 2.539 µs specified in a standard of a vehicle-mounted wireless short-range communication system technology is used for description. In this embodiment of this application, there is no time gap between an S(G) symbol and a G symbol or between an S(T) symbol and a T symbol, a length of a CP in each symbol is greater than 0.456 µs, and a length of each symbol is greater than 2.539 µs.

Optionally, a length of an event period in which the first OFDM symbol and the second OFDM symbol are located is greater than a third threshold. In this solution, increasing the length of the event period helps increase a quantity of symbols that can be accommodated in each event period, to improve data scheduling flexibility. For example, the third threshold may be 20.833 µs.

Optionally, the first device is a slave device, and the second device is a master control device. That a first device configures a first OFDM symbol on a first time domain resource of a first event period, and configures a second OFDM symbol on a second time domain resource of the first event period includes: The first device receives configuration information from the second device. The first device configures the first OFDM symbol on the first time domain resource of the first event period, and configures the second OFDM symbol on the second time domain resource of the first event period based on the configuration information.

S902: The first device sends data to the second device on the first OFDM symbol, and sends control signaling to the second device on the second OFDM symbol; and correspondingly, the second device receives the data from the first device on the first OFDM symbol, and receives the control signaling from the first device on the second OFDM symbol.

Optionally, that the first device sends data to the second device on the first OFDM symbol, and sends control signaling to the second device on the second OFDM symbol includes: The first device sends the data to the second device on the first OFDM symbol at a first power, and sends the control signaling to the second device on the second OFDM symbol at the first power. Correspondingly, that the second device receives the data from the first device on the first OFDM symbol, and receives the control signaling from the first device on the second OFDM symbol includes: The second device receives the data from the first device on the first OFDM symbol at a first power, and receives the control signaling from the first device on the second OFDM symbol at the first power. This solution is compatible with a standard of an existing vehicle-mounted wireless short-range communication system technology, and can improve an anti-multipath interference capability and high-order performance of a system on the basis of a small change to the standard.

Optionally, that the first device sends data to the second device on the first OFDM symbol, and sends control signaling to the second device on the second OFDM symbol includes: The first device sends the data to the second device on the first OFDM symbol at a first power, and sends the control signaling to the second device on the second OFDM symbol at a second power, where the first power is different from the second power. Correspondingly, that the second device receives the data from the first device on the first OFDM symbol, and receives the control signaling from the first device on the second OFDM symbol includes: The second device receives the data from the first device on the first OFDM symbol at a first power, and receives the control signaling from the first device on the second OFDM symbol at a second power. In this solution, the length of the CP in each symbol is increased, so that the first device can perform power adjustment within a part of the CP, and the first device can send the first OFDM symbol and the second OFDM symbol at different transmit powers. In this case, a transmit power of the second OFDM symbol is no longer limited to a transmit power of the first OFDM symbol. Therefore, a coverage area of the second OFDM symbol can be expanded, to enhance a coverage capability of a system. In addition, when the first device is a master control device and the second device is a slave device, the first device sends the first OFDM symbol and the second OFDM symbol at the different transmit powers, so that problems of an excessively high or low transmit power and an undesirable receive AGC gain can be effectively avoided.

Both the first device and the second device in the embodiment shown in FIG. 5 or FIG. 9 may use the architecture of the communication apparatus 400 shown in FIG. 4. Therefore, the processor 401 in the communication apparatus 400 shown in FIG. 4 may invoke the application program code stored in the memory 403, to indicate the first device to perform actions of the first device in the foregoing embodiment, and the processor 401 in the communication apparatus 400 shown in FIG. 4 may invoke the application program code stored in the memory 403, to indicate the second device to perform actions of the second device in the foregoing embodiment. This is not limited in this embodiment.

It may be understood that, in the foregoing embodiments, the method and/or the step implemented by the first device may also be implemented by a component (for example, a chip or a circuit) that may be used for the first device, and the method and/or the step implemented by the second device may also be implemented by a component (for example, a chip or a circuit) that may be used for the second device.

The foregoing mainly describes the solutions provided in embodiments of this application from a perspective of interaction between network elements. Correspondingly, an embodiment of this application further provides a communication apparatus. The communication apparatus is configured to implement the foregoing methods. The communication apparatus may be the first device in the foregoing method embodiment, or an apparatus including the first device, or a component that may be used for the first device; or the communication apparatus may be the second device in the foregoing method embodiment, or an apparatus including the second device, or a component that may be used for the second device. It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

FIG. 12 is a schematic diagram of a structure of a communication apparatus 12. The communication apparatus 12 includes a transceiver 121. The transceiver 121 may also be referred to as a transceiver unit to implement a transceiver function, for example, may be a transceiver circuit, a transceiver machine, or a communication interface.

For example, the communication apparatus 12 is the first device in the foregoing method embodiment. The communication apparatus 12 further includes a processor 122. The processor 122 is configured to: configure a first OFDM symbol on a first time domain resource of a first event period, and configure a second OFDM symbol on a second time domain resource of the first event period, where there is a time gap between the first time domain resource and the second time domain resource, the first OFDM symbol is used to transmit data between the communication apparatus 12 and a second device, and the second OFDM symbol is used to transmit control signaling between the communication apparatus 12 and the second device. The transceiver 121 is configured to: send data to the second device on the first OFDM symbol at a first power, and send control signaling to the second device on the second OFDM symbol at a second power, where the first power is different from the second power.

In a possible implementation, the second power is higher than the first power.

In a possible implementation, a length of a cyclic prefix in each OFDM symbol in the first OFDM symbol or each OFDM symbol in the second OFDM symbol is greater than a first threshold.

In a possible implementation, the first threshold is 0.456 microseconds.

In a possible implementation, a length of each symbol in the first OFDM symbol or each symbol in the second OFDM symbol is greater than a second threshold.

In a possible implementation, the second threshold is 2.539 microseconds.

In a possible implementation, a length of an event period in which the first OFDM symbol and the second OFDM symbol are located is greater than a third threshold.

In a possible implementation, the third threshold is 20.833 microseconds.

In a possible implementation, the communication apparatus 12 is a slave device, and the second device is a master control device. That the processor 122 is configured to: configure a first OFDM symbol on a first time domain resource of a first event period, and configure a second OFDM symbol on a second time domain resource of the first event period includes: receiving configuration information from the second device by using the transceiver 121; and configuring the first OFDM symbol on the first time domain resource of the first event period, and configuring the second OFDM symbol on the second time domain resource of the first event period based on the configuration information.

For example, the communication apparatus 12 is the second device in the foregoing method embodiment.

The transceiver 121 is configured to: receive data from a first device on a first OFDM symbol at a first power, and receive control signaling from the first device on a second OFDM symbol at a second power, where there is a time gap between a first time domain resource occupied by the first OFDM symbol and a second time domain resource occupied by the second OFDM symbol, the first OFDM symbol is used to transmit data between the first device and the communication apparatus 12, the second OFDM symbol is used to transmit control signaling between the first device and the communication apparatus 12, and the first power is different from the second power.

In a possible implementation, the second power is higher than the first power.

In a possible implementation, a length of a cyclic prefix of each OFDM symbol in the first OFDM symbol or each OFDM symbol in the second OFDM symbol is greater than a first threshold.

In a possible implementation, the first threshold is 0.456 microseconds.

In a possible implementation, a length of each symbol in the first OFDM symbol or each symbol in the second OFDM symbol is greater than a second threshold.

In a possible implementation, the second threshold is 2.539 microseconds.

In a possible implementation, a length of an event period in which the first OFDM symbol and the second OFDM symbol are located is greater than a third threshold.

In a possible implementation, the third threshold is 20.833 microseconds.

Alternatively, for example, the communication apparatus 12 is the first device in the foregoing method embodiment. The communication apparatus 12 further includes a processor 122. The processor 122 is configured to: configure a first OFDM symbol on a first time domain resource of a first event period, and configure a second OFDM symbol on a second time domain resource of the first event period, where there is no time gap between the first time domain resource and the second time domain resource, a length of a cyclic prefix in each symbol in the first OFDM symbol or each symbol in the second OFDM symbol is greater than a first threshold, the first OFDM symbol is used to transmit data between the communication apparatus 12 and a second device, and the second OFDM symbol is used to transmit control signaling between the communication apparatus 12 and the second device. The transceiver 121 is configured to: send data to the second device on the first OFDM symbol, and send control signaling to the second device on the second OFDM symbol.

In a possible implementation, the first threshold is 0.456 microseconds.

In a possible implementation, that the transceiver 121 is configured to: send data to the second device on the first OFDM symbol, and send control signaling to the second device on the second OFDM symbol includes: sending the data to the second device on the first OFDM symbol at a first power, and sending the control signaling to the second device on the second OFDM symbol at a second power, where the first power is different from the second power.

In a possible implementation, that the transceiver 121 is configured to: send data to the second device on the first OFDM symbol, and send control signaling to the second device on the second OFDM symbol includes: sending the data to the second device on the first OFDM symbol at a first power, and sending the control signaling to the second device on the second OFDM symbol at the first power.

In a possible implementation, a length of each symbol in the first OFDM symbol or each symbol in the second OFDM symbol is greater than a second threshold.

In a possible implementation, the second threshold is 2.539 microseconds.

In a possible implementation, a length of an event period in which the first OFDM symbol and the second OFDM symbol are located is greater than a third threshold.

In a possible implementation, the third threshold is 20.833 microseconds.

In a possible implementation, the communication apparatus 12 is a slave device, and the second device is a master control device. That the processor 122 is configured to: configure a first OFDM symbol on a first time domain resource of a first event period, and configure a second OFDM symbol on a second time domain resource of the first event period includes: receiving configuration information from the second device by using the transceiver 121; and configuring the first OFDM symbol on the first time domain resource of the first event period, and configuring the second OFDM symbol on the second time domain resource of the first event period based on the configuration information.

Alternatively, for example, the communication apparatus 12 is the second device in the foregoing method embodiment.

The transceiver 121 is configured to: receive data from a first device on a first OFDM symbol, and receive control signaling from the first device on a second OFDM symbol, where there is no time gap between a first time domain resource occupied by the first OFDM symbol and a second time domain resource occupied by the second OFDM symbol, a length of a cyclic prefix in each symbol in the first OFDM symbol or each symbol in the second OFDM symbol is greater than a first threshold, the first OFDM symbol is used to transmit data between the first device and the communication apparatus 12, and the second OFDM symbol is used to transmit control signaling between the first device and the communication apparatus 12.

In a possible implementation, the first threshold is 0.456 microseconds.

In a possible implementation, that the transceiver 121 is configured to: receive data from a first device on a first OFDM symbol, and receive control signaling from the first device on a second OFDM symbol includes: receiving the data from the first device on the first OFDM symbol at a first power, and receiving the control signaling from the first device on the second OFDM symbol at a second power, where the first power is different from the second power.

In a possible implementation, that the transceiver 121 is configured to: receive data from a first device on a first OFDM symbol, and receive control signaling from the first device on a second OFDM symbol includes: receiving the data from the first device on the first OFDM symbol at a first power, and receiving the control signaling from the first device on the second OFDM symbol at the first power.

In a possible implementation, a length of each symbol in the first OFDM symbol or each symbol in the second OFDM symbol is greater than a second threshold.

In a possible implementation, the second threshold is 2.539 microseconds.

In a possible implementation, a length of an event period in which the first OFDM symbol and the second OFDM symbol are located is greater than a third threshold.

In a possible implementation, the third threshold is 20.833 microseconds.

All related content of the steps in the foregoing method embodiments may be cited in function descriptions of corresponding functional modules. Details are not described herein again.

In this embodiment, the communication apparatus 12 is presented in a form of functional modules obtained through integration in an integrated manner. The "module" herein may be a specific ASIC, a circuit, a processor and a memory that execute one or more software or firmware programs, an integrated logic circuit, and/or another component that can provide the foregoing functions.

When the communication apparatus 12 is the first device or the second device in the foregoing method embodiment, in a simple embodiment, a person skilled in the art may figure out that the communication apparatus 12 may be in a form of the communication apparatus 400 shown in FIG. 4.

For example, the processor 401 or 407 in the communication apparatus 400 shown in FIG. 4 may invoke computer-executable instructions stored in the memory 403, so that the communication apparatus 400 performs the short-range wireless communication method in the foregoing method embodiment. Specifically, functions/implementation processes of the processor 122 in FIG. 12 may be implemented by the processor 401 or 407 in the communication apparatus 400 shown in FIG. 4 by invoking the computer-executable instructions stored in the memory 403. Functions/implementation processes of the transceiver 121 in FIG. 12 may be implemented by using a communication module connected to the communication interface 404 in FIG. 4.

Because the communication apparatus 12 provided in this embodiment may perform the foregoing short-range wireless communication method, for technical effects that can be achieved by the communication apparatus 12, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to cores used to execute software instructions to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the method according to any one of the foregoing method embodiments is performed. In a possible implementation, the communication apparatus further includes a memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of'. A single processor or another unit may implement several functions enumerated in the claims. Some measures are recorded in dependent claims that are different from each other, but this does not mean that these measures cannot be combined to produce a great effect.

Although this application is described with reference to specific features and all embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A short-range wireless communication method, wherein the method comprises:
configuring, by a first device, a first orthogonal frequency division multiplexing OFDM symbol on a first time domain resource of a first event period, and configuring a second OFDM symbol on a second time domain resource of the first event period, wherein there is a time gap between the first time domain resource and the second time domain resource, the first OFDM symbol is used to transmit data between the first device and a second device, and the second OFDM symbol is used to transmit control signaling between the first device and the second device; and
sending, by the first device, data to the second device on the first OFDM symbol at a first power, and sending control signaling to the second device on the second OFDM symbol at a second power, wherein the first power is different from the second power.

2. The method according to claim 1, wherein the second power is higher than the first power.

3. The method according to claim 1 or 2, wherein a length of a cyclic prefix in each OFDM symbol in the first OFDM symbol or each OFDM symbol in the second OFDM symbol is greater than a first threshold.

4. The method according to claim 3, wherein the first threshold is 0.456 microseconds.

5. The method according to any one of claims 1 to 4, wherein a length of each symbol in the first OFDM symbol or each symbol in the second OFDM symbol is greater than a second threshold.

6. The method according to claim 5, wherein the second threshold is 2.539 microseconds.

7. The method according to any one of claims 1 to 5, wherein a length of an event period in which the first OFDM symbol and the second OFDM symbol are located is greater than a third threshold.

8. The method according to claim 7, wherein the third threshold is 20.833 microseconds.

9. The method according to any one of claims 1 to 8, wherein the first device is a slave device, and the second device is a master control device; and the configuring, by a first device, a first OFDM symbol on a first time domain resource of a first event period, and configuring a second OFDM symbol on a second time domain resource of the first event period comprises:
receiving, by the first device, configuration information from the second device; and
configuring, by the first device, the first OFDM symbol on the first time domain resource of the first event period, and configuring the second OFDM symbol on the second time domain resource of the first event period based on the configuration information.

10. A short-range wireless communication method, wherein the method comprises:
receiving, by a second device, data from a first device on a first OFDM symbol at a first power, and receiving control signaling from the first device on a second OFDM symbol at a second power, wherein
there is a time gap between a first time domain resource occupied by the first OFDM symbol and a second time domain resource occupied by the second OFDM symbol, the first OFDM symbol is used to transmit data between the first device and the second device, the second OFDM symbol is used to transmit control signaling between the first device and the second device, and the first power is different from the second power.

11. The method according to claim 10, wherein the second power is higher than the first power.

12. A short-range wireless communication method, wherein the method comprises:
configuring, by a first device, a first orthogonal frequency division multiplexing OFDM symbol on a first time domain resource of a first event period, and configuring a second OFDM symbol on a second time domain resource of the first event period, wherein there is no time gap between the first time domain resource and the second time domain resource, a length of a cyclic prefix in each symbol in the first OFDM symbol or each symbol in the second OFDM symbol is greater than a first threshold, the first OFDM symbol is used to transmit data between the first device and a second device, and the second OFDM symbol is used to transmit control signaling between the first device and the second device; and
sending, by the first device, data to the second device on the first OFDM symbol, and sending control signaling to the second device on the second OFDM symbol.

13. The method according to claim 12, wherein the first threshold is 0.456 microseconds.

14. The method according to claim 12 or 13, wherein the sending, by the first device, data to the second device on the first OFDM symbol, and sending control signaling to the second device on the second OFDM symbol comprises:
sending, by the first device, the data to the second device on the first OFDM symbol at a first power, and sending the control signaling to the second device on the second OFDM symbol at a second power, wherein the first power is different from the second power.

15. The method according to any one of claims 12 to 14, wherein a length of each symbol in the first OFDM symbol or a length of each symbol in the second OFDM symbol is greater than a second threshold.

16. The method according to claim 15, wherein the second threshold is 2.539 microseconds.

17. The method according to any one of claims 12 to 16, wherein a length of an event period in which the first OFDM symbol and the second OFDM symbol are located is greater than a third threshold.

18. The method according to claim 17, wherein the third threshold is 20.833 microseconds.

19. The method according to any one of claims 12 to 18, wherein the first device is a slave device, and the second device is a master control device; and the configuring, by a first device, a first OFDM symbol on a first time domain resource of a first event period, and configuring a second OFDM symbol on a second time domain resource of the first event period comprises:
receiving, by the first device, configuration information from the second device; and
configuring, by the first device, the first OFDM symbol on the first time domain resource of the first event period, and configuring the second OFDM symbol on the second time domain resource of the first event period based on the configuration information.

20. A short-range wireless communication method, wherein the method comprises:
receiving, by a second device, data from a first device on a first OFDM symbol, and receiving control signaling from the first device on a second OFDM symbol, wherein
there is no time gap between a first time domain resource occupied by the first OFDM symbol and a second time domain resource occupied by the second OFDM symbol, a length of a cyclic prefix in each symbol in the first OFDM symbol or each symbol in the second OFDM symbol is greater than a first threshold, the first OFDM symbol is used to transmit data between the first device and the second device, and the second OFDM symbol is used to transmit control signaling between the first device and the second device.

21. The method according to claim 20, wherein the first threshold is 0.456 microseconds.

22. The method according to claim 19 or 20, wherein the receiving, by a second device, data from a first device on a first OFDM symbol, and receiving control signaling from the first device on a second OFDM symbol comprises:
receiving, by the second device, the data from the first device on the first OFDM symbol at a first power, and receiving the control signaling from the first device on the second OFDM symbol at a second power, wherein the first power is different from the second power.

23. A communication apparatus, wherein the communication apparatus comprises a transceiver and a processor, wherein
the processor is configured to: configure a first orthogonal frequency division multiplexing OFDM symbol on a first time domain resource of a first event period, and configure a second OFDM symbol on a second time domain resource of the first event period, wherein there is a time gap between the first time domain resource and the second time domain resource, the first OFDM symbol is used to transmit data between the communication apparatus and a second device, and the second OFDM symbol is used to transmit control signaling between the communication apparatus and the second device; and
the transceiver is configured to: send data to the second device on the first OFDM symbol at a first power, and send control signaling to the second device on the second OFDM symbol at a second power, wherein the first power is different from the second power.

24. A communication apparatus, wherein the communication apparatus comprises a transceiver, wherein
the transceiver is configured to: receive data from a first device on a first OFDM symbol at a first power, and receive control signaling from the first device on a second OFDM symbol at a second power, wherein
there is a time gap between a first time domain resource occupied by the first OFDM symbol and a second time domain resource occupied by the second OFDM symbol, the first OFDM symbol is used to transmit the data between the first device and the communication apparatus, the second OFDM symbol is used to transmit the control signaling between the first device and the communication apparatus, and the first power is different from the second power.

25. A communication apparatus, wherein the communication apparatus comprises a transceiver and a processor, wherein
the processor is configured to: configure a first orthogonal frequency division multiplexing OFDM symbol on a first time domain resource of a first event period, and configure a second OFDM symbol on a second time domain resource of the first event period, wherein there is no time gap between the first time domain resource and the second time domain resource, a length of a cyclic prefix in each symbol in the first OFDM symbol or each symbol in the second OFDM symbol is greater than a first threshold, the first OFDM symbol is used to transmit data between the communication apparatus and a second device, and the second OFDM symbol is used to transmit control signaling between the communication apparatus and the second device; and
the transceiver is configured to: send data to the second device on the first OFDM symbol, and send control signaling to the second device on the second OFDM symbol.

26. A communication apparatus, wherein the communication apparatus comprises a transceiver, wherein
the transceiver is configured to: receive data from a first device on a first OFDM symbol, and receive control signaling from the first device on a second OFDM symbol, wherein
there is no time gap between a first time domain resource occupied by the first OFDM symbol and a second time domain resource occupied by the second OFDM symbol, a length of a cyclic prefix in each symbol in the first OFDM symbol or each symbol in the second OFDM symbol is greater than a first threshold, the first OFDM symbol is used to transmit data between the first device and the communication apparatus, and the second OFDM symbol is used to transmit control signaling between the first device and the communication apparatus.

27. A communication system, comprising a communication apparatus configured to perform the method according to any one of claims 1 to 9 and a communication apparatus configured to perform the method according to claim 10 or 11, or comprising a communication apparatus configured to perform the method according to any one of claims 12 to 19 and a communication apparatus configured to perform the method according to any one of claims 20 to 22.

28. A communication apparatus, comprising a memory and a processor coupled to the memory, wherein the memory is configured to store a program, and the processor is configured to execute the program stored in the memory; and when the communication apparatus runs, the processor runs the program, so that the communication apparatus performs the method according to any one of claims 1 to 9, or the communication apparatus performs the method according to claim 10 or 11, or the communication apparatus performs the method according to any one of claims 12 to 19, or the communication apparatus performs the method according to any one of claims 20 to 22.

29. A computer-readable storage medium, wherein the computer-readable storage medium stores a computer program, and when the computer program is executed by a computer, the computer is enabled to perform the method according to any one of claims 1 to 9, the method according to claim 10 or 11, the method according to any one of claims 12 to 19, or the method according to any one of claims 20 to 22.

30. A computer program product, wherein when the computer program product runs on a computer, the computer is enabled to perform the method according to any one of claims 1 to 9, the method according to claim 10 or 11, the method according to any one of claims 12 to 19, or the method according to any one of claims 20 to 22.
